# EUROPEAN PATENT APPLICATION

(11) **EP 2 323 453 A1**
(43) Date of publication of application: **18.05.2011**
(21) Application number: 09811052.1
(22) Date of filing: 03.09.2009
(51) Int. Cl.: H04W 56/00

(54) **METHOD, DEVICE AND SYSTEM FOR EXECUTING SYNCHRONIZATION**

(30) Priority: 04.09.2008 CN 200810215039
(71) Applicant: Huawei Technologies Co., Ltd., Longgang District, Shenzhen Guangdong 518129 (CN)
(72) Inventor: WANG, Rui Huawei Technologies Co.Ltd., Int.Prop.Dept., Shenzhen (CN); LI, Kepeng Huawei Technologies Co.Ltd., Int.Prop.Dept., Shenzhen (CN); LIU, Haitao Huawei Technologies Co.Ltd., Int.Prop.Dept., Shenzhen (CN)
(74) Representative: Kreuz, Georg Maria
(86) International application number: PCT/CN2009/073734
(87) International publication number: WO 2010/025677

(57) **Abstract**

A method, an apparatus, and a system for executing synchronization are provided. The method includes: obtaining synchronization information in a set Data Synchronization Management Object (DSMO); and executing a synchronization task corresponding to the synchronization information in the DSMO. Because the server that synchronizes data with the terminal can access the DSMO in the terminal, and query and manage the specific synchronization task defined in the DSMO of the terminal, the server can know the data synchronization operations to be performed between the terminal and the server, set and modify the data synchronization operations, and define the synchronization tasks, thus reducing the requirements on the technical capabilities of a user.

## Description

This application claims priority to Chinese Patent Application No. 200810215039.X, filed with the Chinese Patent Office on September 4, 2008 and entitled "Method, Apparatus and System for Executing Synchronization Periodically", which is incorporated herein by reference in its entirety.

### Field of the Invention

The present invention relates to communication technologies, and in particular, to a method, an apparatus, and a system for executing synchronization.

### Background of the Invention

In the information age, people expect to use a portable device to receive and send information anytime anywhere. The results of data exchange and application execution need to be stored in the device used by the user. Relevant devices need to update the data so that the data in the relevant devices is consistent with the data stored in the device used by the user. For example, address book information is stored in a mobile phone or a Personal Digital Assistant (PDA), and the same address book information is stored in the office or home computer. People expect to keep information consistent between such devices. After the data in one of the devices changes, the user operates the data in other devices accordingly to achieve consistency. This operation is known as data synchronization. Currently, a general synchronization protocol is Synchronization Markup Language (SyncML) protocol.

The Data Synchronization (DS) technology is often applied to synchronization between a user terminal (such as a mobile phone) and a server. That is, the changed data on the user terminal is backed up on the server. When the data on the user terminal is damaged, the correct data may be recovered according to the data on the server. To achieve a better user effect, the DS technology needs to execute the data synchronization task periodically.

The DS technology in the prior art performs data synchronization at intervals, namely, periodically. A timer is added to the user terminal, and the timer triggers the data synchronization operation. The data synchronization operation is generally predefined by the user terminal, and stored in the user terminal. The server is unable to know or modify the parameters of the periodical synchronization operation defined by the user terminal. When the set time arrives, the timer triggers the user terminal to perform the data synchronization operation.

The drawbacks of the prior art are: The user terminal needs to define the data synchronization operation to be performed, which requires high capabilities of a user terminal; and the server is unable to know the periodical data synchronization operation for the user terminal, and unable to set or modify the data synchronization operation.

### Summary of the Invention

The present invention provides a method, an apparatus, and a system for executing synchronization to solve these problems: The server is unable to know the periodical data synchronization operation to be performed by the terminal, and unable to set or modify the data synchronization operation.

According to the first aspect of the present invention a method for executing synchronization includes:
obtaining synchronization information in a set Data Synchronization Management Object (DSMO); and
executing a synchronization task corresponding to the synchronization information in the DSMO.

According to the second aspect of the present invention a method for querying a synchronization task includes:
receiving a DSMO query command sent by a server;
querying a synchronization task corresponding to synchronization information in a DSMO; and
sending a query result to the server.

According to the third aspect of the present invention a method for modifying a synchronization task includes:
receiving a DSMO modification command sent by a server; and
modifying a synchronization task corresponding to synchronization information in a DSMO.

According to the fourth aspect of the present invention a terminal includes:
an obtaining unit, configured to obtain synchronization information in a set DSMO; and
an executing unit, configured to execute a synchronization task corresponding to the synchronization information in the DSMO.

The terminal according to the fourth aspect of the present invention may additionally include:
a fifth receiving unit, configured to receive a DSMO access command sent by a server, where the DSMO access command is a DSMO query command and/or a DSMO modification command; and
an editing unit, configured to query and/or modify a synchronization task corresponding to synchronization information in a DSMO according to the received DSMO access command.

According to the fifth aspect of the present invention a server includes:
a first MO setting unit, configured to generate a Device Management (DM) command for setting a DSMO; and
a sending unit, configured to send the DM command for setting the DSMO to a terminal.

According to a sixth aspect of the present invention a synchronization system includes in its first implementation form:
a terminal, configured to obtain synchronization information in a set DSMO, and execute a synchronization task corresponding to the synchronization information in the DSMO; and
a server, configured to work with the terminal to execute the synchronization task corresponding to the synchronization information in the DSMO.

In an alternative implementation form the synchronization system according to the sixth aspect of the present invention includes:
a terminal, configured to query and/or modify a DSMO according to a received DSMO access command, where the DSMO access command is a DSMO query command and/or a DSMO modification command; and
a server, configured to send the DSMO access command.

In the embodiments of the present invention, the terminal obtains the synchronization information in the set DSMO, and executes the synchronization task corresponding to the synchronization information in the DSMO; because the server that synchronizes data with the terminal can access the DSMO in the terminal, and query and manage the specific synchronization task defined in the DSMO of the terminal, the server can access the DSMO of the terminal to know the data synchronization operations to be performed between the terminal and the server, set and modify the data synchronization operations, and define the synchronization tasks, thus reducing the requirements on the technical capabilities of a user.

### Brief Description of the Drawings

FIG. 1 is an overall flowchart of a method for executing synchronization according to an embodiment of the present invention;
FIG. 2 is a flowchart of a method for executing synchronization according to a first embodiment of the present invention;
FIG. 3 shows nodes of a DSMO in the first embodiment of the present invention;
FIG. 4 shows nodes of a DM scheduling MO used in the first embodiment of the present invention;
FIG. 5 is a flowchart of a method for executing synchronization according to a second embodiment of the present invention;
FIG. 6 shows nodes of a DSMO in the second embodiment of the present invention;
FIG. 7 is a flowchart of a method for executing synchronization according to a third embodiment of the present invention;
FIG. 8 shows nodes of a DSMO after being set according to a DS1.2.2 version in the third embodiment of the present invention;
FIG. 9 shows nodes of a DSMO after being set according to a DS2.0 version in the third embodiment of the present invention;
FIG. 10 is a flowchart of a method for executing synchronization according to a fourth embodiment of the present invention;
FIG. 11 is a flowchart of a method for executing synchronization according to a fifth embodiment of the present invention;
FIG. 12 is a block diagram of a terminal according to a sixth embodiment of the present invention;
FIG. 13 is a block diagram of a terminal according to a seventh embodiment of the present invention;
FIG. 14 is a block diagram of a terminal according to an eighth embodiment of the present invention;
FIG. 15 is a block diagram of a server according to a ninth embodiment of the present invention;
FIG. 16 is a block diagram of a server according to a tenth embodiment of the present invention;
FIG. 17 is a block diagram of a synchronization system according to an eleventh embodiment of the present invention; and
FIG. 18 is a block diagram of a synchronization system according to a twelfth embodiment of the present invention.

### Detailed Description of the Embodiments

In a method for executing synchronization provided in an embodiment of the present invention, synchronization information is set in the DSMO. The synchronization information is a series of information required for executing synchronization. When the terminal initiates a synchronization task, the terminal performs the synchronization operation corresponding to the synchronization information in the DSMO.

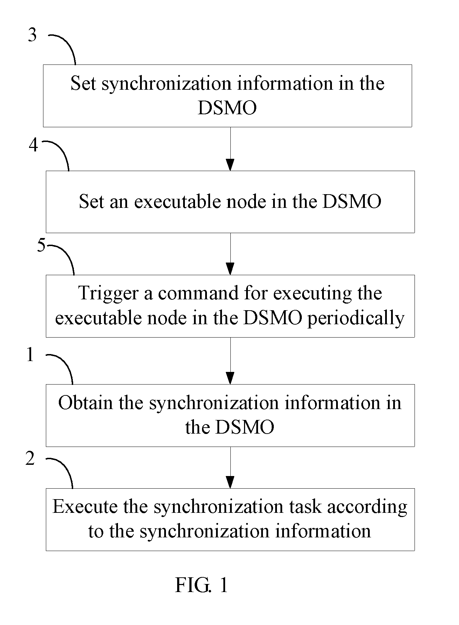

As shown in FIG. 1, a method for executing synchronization in an embodiment of the present invention includes:
Step 1: Obtain synchronization information in a set DSMO.
Step 2: Execute a synchronization task according to the obtained synchronization information in the DSMO.

Described above are the steps required for executing synchronization for one time according to the method for executing synchronization provided in this embodiment. It should be noted that before obtaining the synchronization information, the method may include the following steps:
Step 3: Set synchronization information in the DSMO.
Step 4: Set an executable node in the DSMO.
Step 5: Periodically trigger the command for executing the executable node in the DSMO.

The obtaining of the synchronization information in the DSMO in step 2 includes: obtaining the synchronization information in the DSMO by triggering the command for executing the executable node in the DSMO.

Step 3 may be performed before, during or after step 4.

After the terminal acknowledges the execution of a command for executing an executable node ("Exec") in the DSMO, the terminal triggers execution of the data synchronization task corresponding to the synchronization information in the DSMO. When the terminal executes the data synchronization task corresponding to the synchronization information in the DSMO, the method for executing synchronization is similar to the prior art.

By using the method provided in this embodiment, synchronization information is set in the DSMO. When the terminal initiates a synchronization task, the terminal obtains the synchronization information in the DSMO, and executes the synchronization task corresponding to the synchronization information in the DSMO. Because the server (that is, DS server) that synchronizes data with the terminal can access the DSMO in the terminal, and query and manage the nodes defined in the DSMO of the terminal, the server can access the DSMO of the terminal to know the data synchronization operations to be performed between the terminal and the server, set and modify the data synchronization operations, and define synchronization tasks, thus reducing the requirements on the technical capabilities of a user.

The method for executing synchronization provided in an embodiment of the present invention is described below in more detail. The first embodiment is described first. In the method for executing synchronization provided in the first embodiment, one synchronization operation between the terminal and the server synchronizes the data that is identified by only one datastore URI.

### First Embodiment

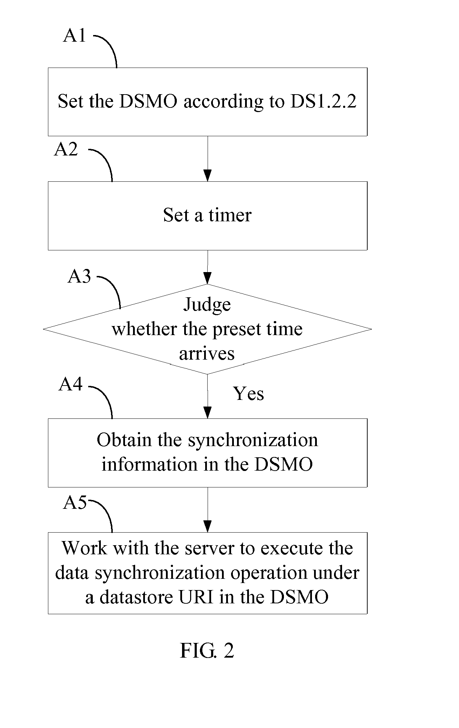

As shown in FIG. 2, a method for executing synchronization includes the following steps:
Step A1: The terminal sets synchronization information in the DSMO, namely, sets the server identifier (ID), synchronization type, and information about synchronization content in the DSMO.

The operation of setting the DSMO may be performed by the terminal, or by the server remotely. The existing DSMO is designed to set service parameters of data synchronization. The set parameters (such as authentication mode) are stored in the terminal. The server sets the parameters initially, or selects or modifies the parameters by using a DM protocol.

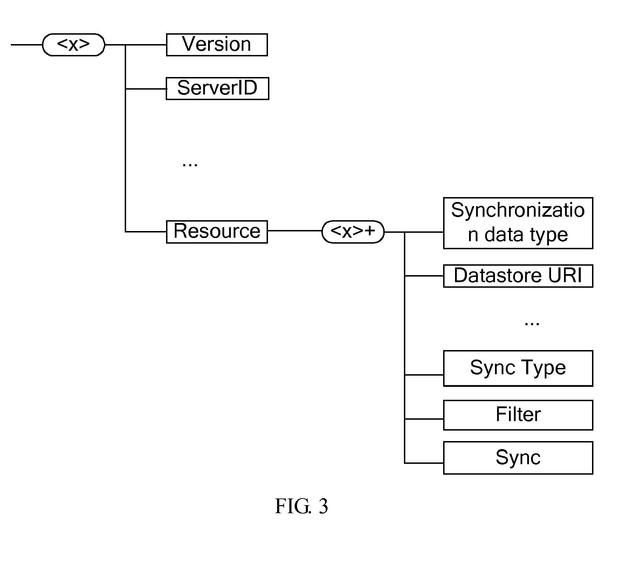

In the first embodiment of the present invention, the terminal sets synchronization information in the DSMO. The synchronization information includes information about synchronization content, server ID, and synchronization type. FIG. 3 shows information included in a DSMO set in the method provided in the first embodiment of the present invention. For ease of understanding FIG. 3, the synchronization information is recorded in the resource node and the server ID node of the DSMO set in the first embodiment of the present invention. The server ID node is parallel to the resource node. After the terminal initiates a synchronization operation, the terminal obtains the recorded synchronization information, and executes the synchronization task corresponding to the synchronization information. In this embodiment, an executable node (namely, the Sync node) is added under the resource node. After the terminal generates a command specific to the Sync node periodically, the command triggers one synchronization task corresponding to the synchronization information in the DSMO, and the terminal executes the synchronization task corresponding to the synchronization information in the DSMO.

Child nodes under the resource node in the existing DSMO are: Accept, datastore URI, and Sync Type. The type of data for synchronization between the terminal and the server is recorded in the Accept node. The Accept node is also known as a synchronization data type node; the information about the content of synchronization between the terminal and the server is recorded in the URI node; the type of synchronization between the terminal and the server is recorded in the Sync Type node; and the information about the server that synchronizes data with the terminal is recorded in the server ID node which is parallel to the resource node.

In addition, a Filter node may be added under the resource node of the Sync node. As shown in FIG. 3, the information recorded in the Filter node is applied to the synchronization operation between the terminal and the server to filter out the data requiring no synchronization.

The defined DSMO may include no Filter node. When the defined DSMO includes no Filter node, all data needs to be synchronized by default. The defined DSMO may include no Accept node. When the DSMO includes no Accept node, the server supports all data types by default, and the data synchronization occurs between the terminal and the server without considering whether the server supports the type of the data to be synchronized.

Step A2: The terminal uses an Open Mobile Alliance (OMA) DM scheduling technology to set the DM scheduling MO in the terminal. In this way, the terminal triggers the DM command for executing the executable node in the DSMO within the preset time.

In this embodiment, an OMA DM scheduling technology is applied to set the DM scheduling MO in the terminal. In this way, when the trigger condition is fulfilled, the DM scheduling MO in the terminal executes the DM command corresponding to the trigger condition. In this embodiment, the DM command is a command for executing the executable node in the DSMO of the terminal.

For better understanding of step A2 in the first embodiment, the OMA DM scheduling technology is described below. This technology is equivalent to a timing technology. A Device Management Scheduling Server (DMSES) needs to set a Device Management Scheduling Client (DMSEC) first, namely, set the relevant parameters. In this embodiment, it is assumed that the DMSES configures a timing task for the DMSEC, namely, the terminal initiates data synchronization to a server specified in the DSMO of the terminal at 9:00 a.m. every day.

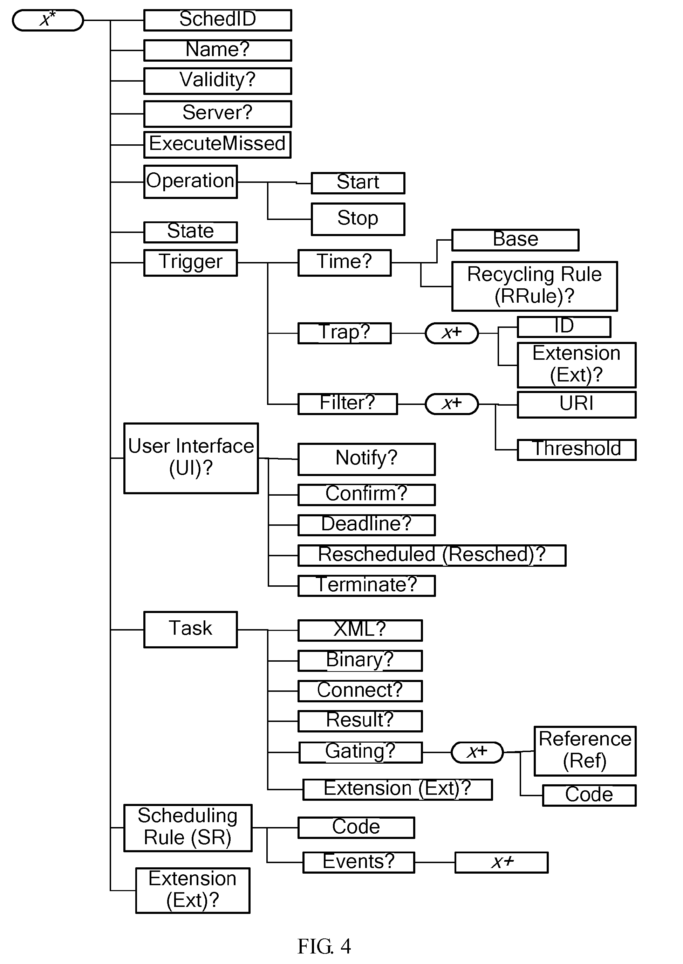

In the periodical operation between the DMSES and the DMSEC, the information included in the DM scheduling MO is shown in FIG. 4. Different information of the DM scheduling MO is recorded on each node. The DMSES sets a parameter of the periodical synchronization operation, sets the x*/Trigger/Time in the DM scheduling MO to "9:00", and adds a DM command corresponding to the trigger condition in the x/Task/XML. That is, a DM command "Exec ./<x>/Resource/<x>+/Sync" corresponds to the trigger condition "9:00", and indicates that the Sync node is to be executed. In this command, <x> is a placeholder node, and multiple child nodes exist under it, the same being applicable hereinafter.

It should be noted that the OMA DM scheduling technology in this embodiment is similar to the prior art.

Step A3: The terminal judges whether the time preset in the DM scheduling MO arrives; if the time arrives, the terminal generates a DM command corresponding to the time. The command triggers the terminal to initiate a synchronization task corresponding to the synchronization information in the DSMO.

Through the clock on the terminal, the DMSEC finds that it is 9:00 now, and the condition set in "x*/Trigger/Time" of the DM scheduling MO is fulfilled. Therefore, the DMSEC searches "x/Task/XML" of the DM scheduling MO for the DM command "Exec ./<x>/Resource/<x>+/Sync" corresponding to the trigger condition "9:00". The DM command is a command for executing the executable node in the DSMO (namely, the Sync node in this embodiment). The terminal triggers one synchronization task. According to the synchronization content in the DSMO, the synchronization operation is applied to the datastore URI set in the URI node under the resource node.

Step A4: According to the DM command triggered by the timer in the terminal, the terminal triggers a synchronization task corresponding to the synchronization information in the DSMO, and obtains the synchronization information in the DSMO.

In step A4, the synchronization information in the DSMO obtained by the terminal includes data in the URI node under the resource node, and the data in the URI node is information about synchronization content. When the terminal and the server execute the synchronization task in the DSMO, the terminal needs to obtain not only the information about synchronization content, but also the server ID and the synchronization type. The synchronization information may further include filter information and/or synchronization data type information. The filter information is intended to filter out the data requiring no synchronization.

Step A5: The terminal and the server execute the synchronization task corresponding to the synchronization information in the DSMO.

In step A5, the terminal and the server execute the synchronization task corresponding to the synchronization information in the DSMO according to the synchronization information in the DSMO which is obtained in step A4.

It should be noted that in the synchronization process, the process of setting the synchronization information is not mandatory during every synchronization process. The terminal may periodically perform the same synchronization operation multiple times after the synchronization information is set.

Described above is a method for executing synchronization in the first embodiment. In this method, an executable node is added in the DSMO, and a timer is set. When the time set in the timer arrives, the executable node in the DSMO is executed, and the synchronization task corresponding to the synchronization information in the DSMO is triggered. The terminal obtains the synchronization information in the DSMO and executes the synchronization operation corresponding to the synchronization information in the DSMO. Because the server (that is, DS server) that synchronizes data with the terminal can access the DSMO in the terminal, and query and manage the specific synchronization task defined in the DSMO of the terminal, the server can access the DSMO of the terminal to know the data synchronization operations to be performed between the terminal and the server, set and modify the data synchronization operations, and define the synchronization tasks, thus reducing the requirements on the technical capabilities of a user.

Described above is a method for executing synchronization in the first embodiment. Another method for executing synchronization is provided in the second embodiment. This method is similar to the method for executing synchronization in the first embodiment. The difference is: In step A1 in the first embodiment, the setting of the DSMO is to record the synchronization type information into the Sync Type node; but in the method in the second embodiment, the synchronization type information is expressed by the information in the Direction node and the Behavior node under the Sync Type node. The following describes the second embodiment.

### Second Embodiment

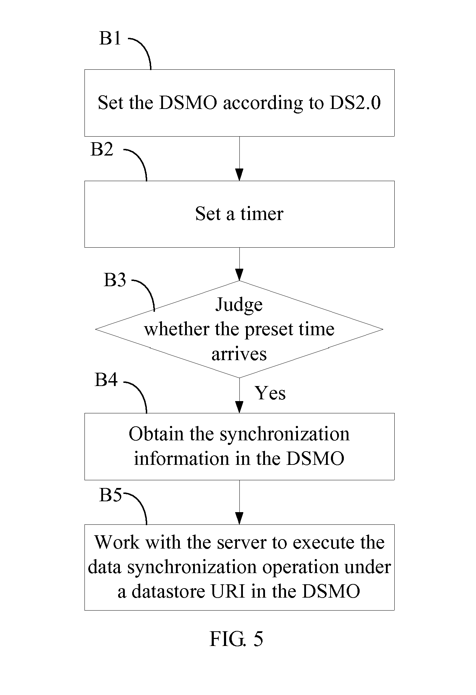

As shown in FIG. 5, a method for executing synchronization includes the following steps:
Step B1: The terminal sets synchronization information in the DSMO, namely, sets the server ID, synchronization type and synchronization content in the DSMO.

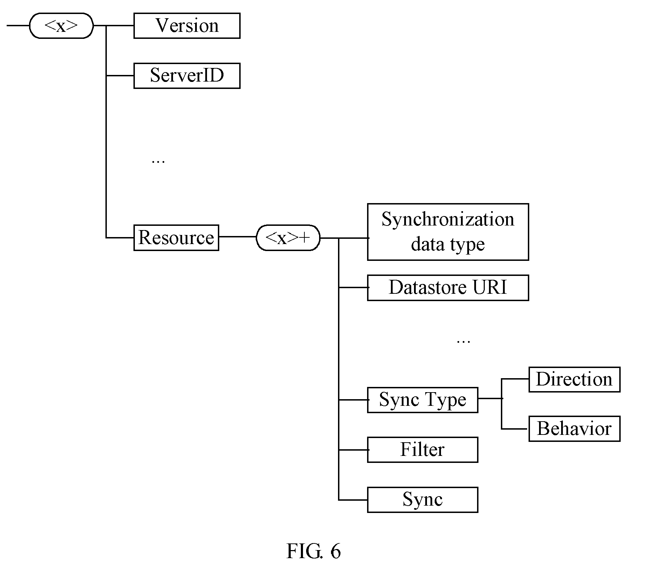

Step B1 is similar to step A1 in the first embodiment; however, the setting of the DSMO in step B1 is to add a Direction node and a Behavior node under the Sync Type node in the DSMO. FIG. 6 shows information included in a DSMO defined in the method provided in the second embodiment.

To help understand differences between the first embodiment and the second embodiment, DS1.2.2 and DS2.0 are described below. DS1.2.2 and DS2.0 are two versions of the OMA DS standard. One of the differences between the two versions lies in the method for expressing the synchronization type information. In the DS1.2.2 version, the synchronization type information is expressed by a parameter. The parameter has seven values indicating seven synchronization types. In the DS2.0 version, the synchronization type information is expressed by two parameters, namely, Direction and Behavior. The terminal or the server in the second embodiment sets the DSMO in the same way as setting the DSMO in the first embodiment, as illustrated in FIG. 6. In the DS2.0 version, two child nodes (Direction and Behavior) are set under the Sync Type node in the DSMO. The synchronization direction is recorded in the Direction node, and the synchronization behavior is recorded in the Behavior node. The two nodes reflect the synchronization type information.

In the data synchronization standard of DS1.2.2 and DS2.0, the set DSMO needs to include the following parameters:
server ID: ID of the server that synchronizes data with the terminal;
synchronization data type: type of data to be synchronized, namely, the data type supported by the server (this parameter is not necessarily included in the DSMO; if the parameter is not included in the DSMO, the server supports all data types by default);
synchronization content: datastore ID or link corresponding to the data to be synchronized, which may indicate a datastore, or a URI in a datastore;
Sync Type: mode of synchronization between the terminal and the server, which is described above with respect to different DS versions;
Exec node: a trigger point of the synchronization operation, which triggers the synchronization operation between the terminal and the server after the terminal executes this node; and
filter information: a filter applicable in the synchronization process. The data requiring no synchronization is filtered out. The filter information is not necessarily provided in the DSMO, and, in this case, it is deemed that all data needs to be synchronized.

Steps B2-B5 are similar to steps A2-A5 in the first embodiment.

Described above is a method for executing synchronization in the second embodiment. An executable node is added in the existing DSMO, and a timer is set. When the time set in the timer arrives, the terminal triggers the synchronization task corresponding to the synchronization information in the DSMO. The terminal obtains the synchronization information in the DSMO and executes the synchronization operation corresponding to the synchronization information in the DSMO. Because the server (that is, DS server) that synchronizes data with the terminal can access the DSMO in the terminal, and query and manage the specific synchronization task defined in the DSMO of the terminal, the server can access the DSMO of the terminal to know the data synchronization operations to be performed between the terminal and the server, set and modify the data synchronization operations, and define the synchronization tasks, thus reducing the requirements on the technical capabilities of a user.

Another method for executing synchronization is provided in the third embodiment of the present invention. In the method provided in the first embodiment and second embodiment, one data synchronization operation can synchronize the data that is identified by only one datastore URI between the terminal and the server; in the method provided in the third embodiment, one data synchronization operation can synchronize data that is identified by more than one datastore URI, as detailed below.

### Third Embodiment

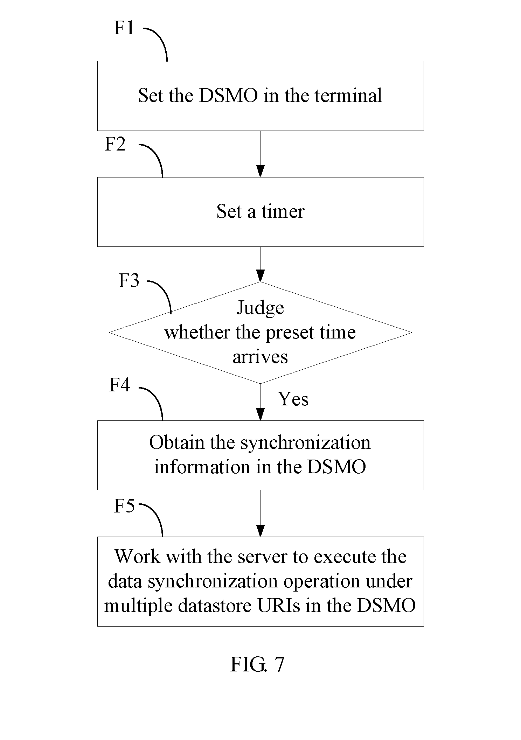

As shown in FIG. 7, a method for executing synchronization includes the following steps:
Step F1 : Set the DSMO in the terminal.

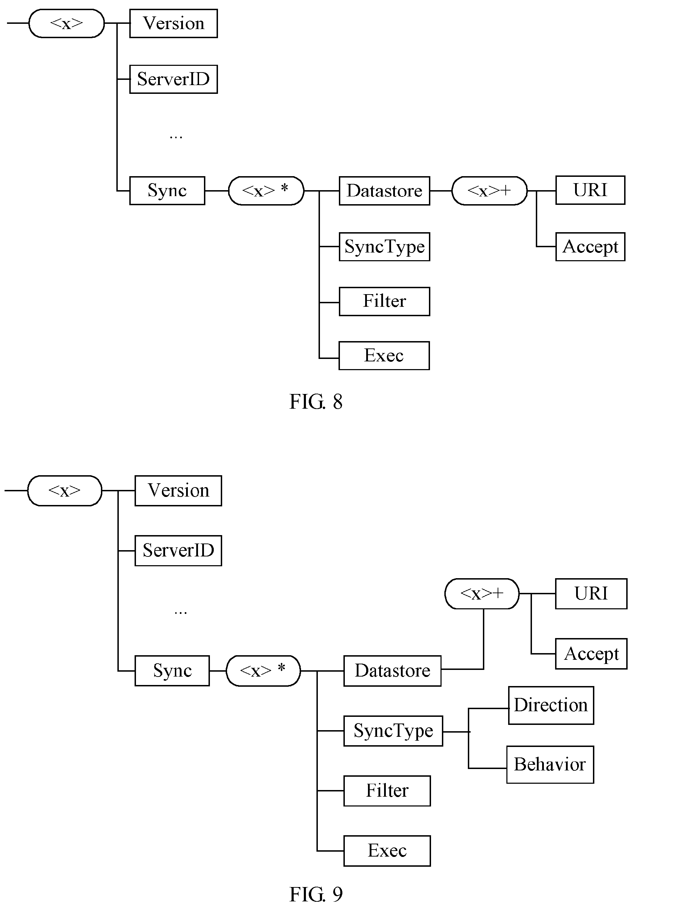

The definition of the DSMO is illustrated in FIG. 8 and FIG. 9. That is, an intermediate node (namely, a Sync node) is added under the root directory of the DSMO. Multiple child nodes exist under the Sync node. <x>* is used to group the child nodes under the Sync node. Every node as a result of extending <x>* includes similar nodes, and can include these nodes: datastore, Sync Type, and Exec. Multiple URI nodes may be set under the datastore node to record the synchronization content information. Every URI is a value in a URI child node of an <x>+ node. The definition of the Accept node is similar to that in the prior art.

It should be noted that FIG. 8 differs from FIG. 9 in the setting of the Sync Type node. In FIG. 8, the Sync Type node includes the synchronization type information. In

FIG. 9, the Sync Type node includes a Direction node and a Behavior node additionally. The information in the two nodes makes up the synchronization type information. The implementation mode is similar to the description in the second embodiment.

The child nodes of the <x>* node may further include a Filter node. The information recorded in the Filter node is designed to filter the synchronization data during the synchronization operation.

Other settings of the DSMO are similar to those of the existing DSMO.

Step F2: Similarly to step A2 in the first embodiment above, the terminal uses an OMA DM scheduling technology to set the DM scheduling MO in the terminal. In this way, the terminal triggers the DM command for executing the executable node in the DSMO within the preset time.

The definition of the DSMO in step F1 is different from that in step A1. Therefore, in the OMA DM scheduling technology, the DM command written in the DM scheduling MO is "Exec ./<x>/Sync/<x>*/Exec", where <x> or <x>* is a placeholder node, which can include instantiated child nodes. The child nodes include the synchronization information required for the synchronization operation.

Step F3: Similarly to step A3, the terminal judges whether the time preset in the DM scheduling MO arrives; if so, the terminal triggers a DM command corresponding to the time. The DM command is a command for executing the executable node in the DSMO. The terminal triggers a synchronization task corresponding to the synchronization information in the DSMO.

Step F4: Similarly to step A4, according to the DM command triggered by the timer in the terminal, the terminal executes the executable node (namely, the Exec node in this embodiment) in the DSMO, triggers a synchronization task corresponding to the synchronization information in the DSMO, and obtains the synchronization information in the DSMO.

In step F4, due to the setting of the executable node of the DSMO, the terminal executes the executable node in the DSMO, and obtains the synchronization information in the DSMO. The obtained synchronization information includes synchronization content, server ID, and synchronization type. The obtained synchronization information may further include synchronization data type and/or filter information. The synchronization content information is recorded in multiple URI nodes under the Datastore node under the Sync node in the DSMO.

Step F5: The terminal and the server execute the data synchronization operation under at least one datastore URI in the DSMO.

The terminal executes the synchronization task corresponding to the synchronization information in the DSMO according to the synchronization information in the DSMO. Because the synchronization content information in the obtained synchronization information in the DSMO is the synchronization content in all URI nodes under a Sync node, the content synchronized between the terminal and the server is the data identified by multiple datastore URIs.

Described above is a method for executing synchronization in the third embodiment. In this method, an executable node is added in the DSMO, and a timer is set. When the time set in the timer arrives, the executable node in the DSMO is executed, and the terminal obtains the synchronization information in the DSMO, and executes the synchronization operation corresponding to the synchronization information in the DSMO. Because the server (that is, DS server) that synchronizes data with the terminal can access the DSMO in the terminal, and query and manage the specific synchronization task defined in the DSMO of the terminal, the server can access the DSMO of the terminal to know the data synchronization operations to be performed between the terminal and the server, set and modify the data synchronization operations, and define the synchronization tasks, thus reducing the requirements on the technical capabilities of a user.

### Fourth Embodiment

In a method for executing synchronization provided in this embodiment, the terminal or server sets the synchronization information in the DSMO, a timer is set in the server for the synchronization task, and a mapping relation between the timer and the synchronization task is established. The synchronization task is expressed by URI information of an executable node that triggers synchronization in the DSMO of the terminal, for example, "./<x>/Resource/<x>+/Sync" mentioned in the first embodiment. When the time set in the timer of the server arrives, the server sends a DM command such as "Exec ./<x>/Resource/<x>+/Sync" for executing the executable node (namely, the Sync node).

In the fourth embodiment, when the time set in the timer arrives, the server may send a DM command to execute the executable node in the DSMO, and trigger the terminal to obtain the synchronization information in the DSMO and execute the predefined synchronization task. Therefore, the server can control the occasion of the terminal executing the synchronization task, and enhance management on the synchronization tasks of the terminal. The following describes this embodiment.

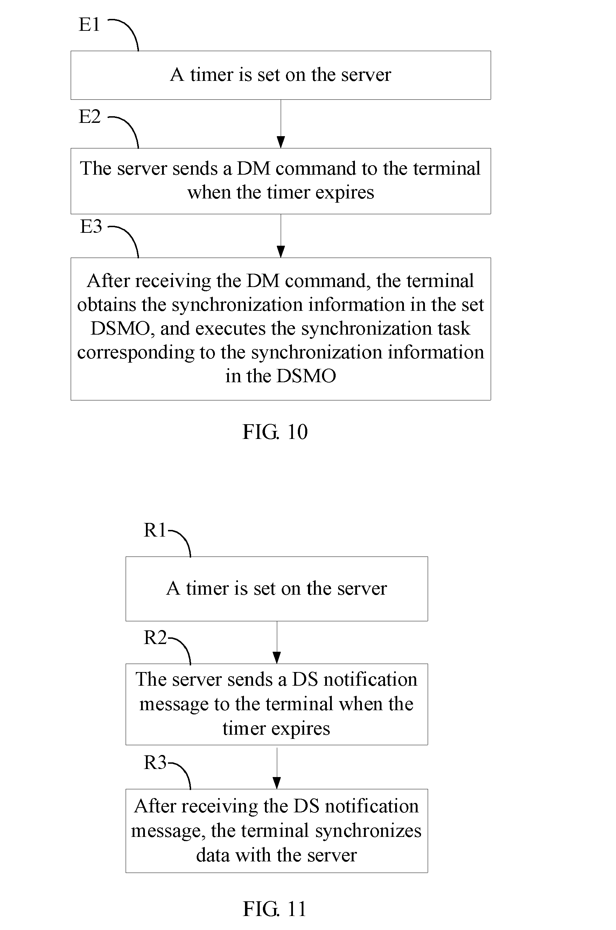

As shown in FIG. 10, a method for executing synchronization includes the following steps:
Step E1 : Set a timer on the server.

The timer setting in step E1 includes: setting time, and setting up a mapping relation between the set time and a task. Table 1 shows the set time and the task executed at this time, which are stored on the server.

**Table 1**

| Timer ID | Set time | Task URI |
|---|---|---|
| 1 | 9:00 | ./<x>/Resource/<x>+/Sync |
| 2 | | |

In Table 1, "timer ID" is information about maintenance performed by the server for a timer. "Set time" is a working parameter of the timer. It may be specific time, for example, the timer expires when the system time reaches the time; or may be a time segment, for example, the timer expires after elapse of this time segment. "Task URI" is the operation to be performed by the server when the timer expires. In this embodiment, when the timer expires, the server sends a DM command to the terminal, and the destination address of the DM command is the task URI.

In fact, the OMA DM scheduling technology is also applicable to the setting of the timer in the fourth embodiment. That is, a server is regarded as a DMSEC, which works with a DMSES different from that server to set the timer. Other timing technologies different from the OMA DM scheduling technology may also be applied to timing of the server, which is covered in the prior art and not detailed here.

Step E2: The server sends a DM command to the terminal when the timer expires.

The DM command includes information about the URI of the executable node that triggers synchronization in the DSMO of the terminal.

Step E3: After receiving the DM command, the terminal obtains the synchronization information in the set DSMO, and executes the synchronization task corresponding to the synchronization information in the DSMO.

The operation of data synchronization between the terminal and the server in step E3 is similar to the counterpart in the first embodiment, the second embodiment, and the third embodiment.

In the method for executing synchronization in the fourth embodiment, when the time set in the timer arrives, the server may send a DM command which triggers the terminal to execute the predefined synchronization task. Therefore, the server can control the occasion of the terminal executing the synchronization task, and enhance management on the synchronization tasks of the terminal.

Another method for executing synchronization is provided herein. In this embodiment, the timer is a part of the server. When the time set in the timer arrives, the server executes the corresponding operation. This embodiment is detailed below.

### Fifth Embodiment

As shown in FIG. 11, a method for executing synchronization includes the following steps:
Step R1 : Set a timer on the server.

The timer setting in step R1 includes: setting time, and setting up a mapping relation between the set time and a task. Table 2 shows the set time and the task executed at this time, which are stored on the server

**Table 2**

| Timer ID | Set time | Task |
|---|---|---|
| 1 | 9:00 | DS Notification <xxx> |
| 2 | | |

In Table 2, "timer ID" is information about maintenance performed by the server for a timer. "Set time" is a working parameter of the timer. It may be specific time, for example, the timer expires when the system clock reaches the time; or may be a time segment, for example, the timer expires after elapse of this time segment. "Task" is the operation to be performed by the server when the timer expires. In this embodiment, when the timer expires, the server sends a DS notification message to the terminal.

In fact, the OMA DM scheduling technology is also applicable to the setting of the timer in the fifth embodiment. That is, a server is regarded as a DMSEC, which works with a DMSES different from that server to set the timer. Other timing technologies different from the OMA DM scheduling technology may also be applied to timing of the server, which is covered in the prior art and not detailed here.

Step R2: The server sends a DS notification message to the terminal when the timer expires.

The notification message includes the following parameters:
synchronization data type: type of data to be synchronized, namely, the data type supported by the server (this parameter is not necessarily included in the notification message; if this parameter is not included in the notification message, the server supports all data types by default);
synchronization content: datastore ID or link corresponding to the data to be synchronized, which may indicate a datastore, or a URI in a datastore;
Sync Type: mode of synchronization between the terminal and the server, which is described above with respect to different DS versions in the second embodiment above; and
filter information: a filter applicable in the synchronization process. The data requiring no synchronization is filtered out. The filter information is not necessarily provided, and, in this case, it is deemed that all data needs to be synchronized.

Step R3: After receiving the DS notification message, the terminal synchronizes data with the server.

The operation of data synchronization between the terminal and the server in step R3 is similar to the prior art.

In the method for executing synchronization in the fifth embodiment, the server delivers a DS notification message periodically, decides the time of performing data synchronization, and sets and modifies the data synchronization operation; moreover, the server can define synchronization tasks, thus reducing requirements on technical capabilities of a user.

The first embodiment to the fifth embodiment above deal with methods for executing synchronization under the present invention. The following describes the apparatus provided in the present invention.

### Sixth Embodiment

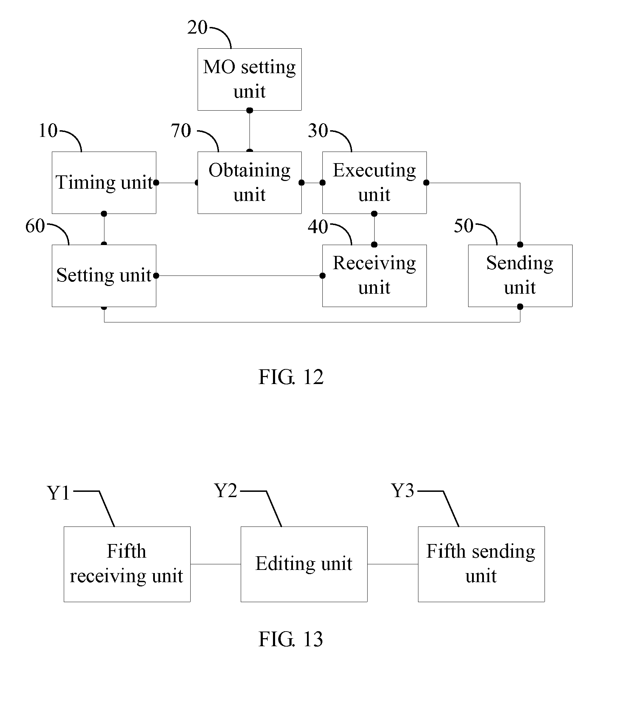

A terminal provided in this embodiment can initiate a synchronization operation with the server automatically at set time. As shown in FIG. 12, the terminal includes: an executing unit 30, a receiving unit 40, a sending unit 50, and an obtaining unit 70.

The obtaining unit 70 is configured to obtain synchronization information in the set DSMO.

The executing unit 30 is configured to execute the synchronization task corresponding to the synchronization information in the DSMO between the terminal and the server.

The terminal provided in the sixth embodiment may further include a timing unit 10, an MO setting unit 20, and a setting unit 60.

The timing unit 10 is configured to generate a signal for triggering execution of synchronization when the timer expires, and notify the terminal to execute the synchronization task corresponding to the synchronization information in the DSMO.

The MO setting unit 20 is configured to set the DSMO. The set DSMO includes the synchronization information.

The setting unit 60 is configured to set the timer according to the time setting message received by the receiving unit 40 from the server, and generate a setting response message after completion of the setting.

The receiving unit 40 and the sending unit 50 are further configured to communicate with the server when setting the timing unit.

In the terminal provided in the sixth embodiment, the DSMO is set in the MO setting unit 20. When the time set in the setting unit 60 arrives, the timing unit 10 sends a DM command to the obtaining unit 70; the obtaining unit 70 obtains the synchronization information in the DSMO; and the executing unit 30 executes the synchronization operation with the server through the receiving unit 40 and the sending unit 50 according to the synchronization information obtained by the obtaining unit 70. The MO setting unit 20 sets at least one executable node in the DSMO. The executable node can trigger execution of the synchronization operation after the timer sends a notification of executing the synchronization operation.

As shown in FIG. 13, a terminal provided in the seventh embodiment of the present invention includes a fifth receiving unit Y1 and an editing unit Y2.

The fifth receiving unit Y1 is configured to receive a DSMO access command sent by the server. The DSMO access command is a DSMO query command and/or a DSMO modification command.

The editing unit Y2 is configured to query and/or modify the synchronization task corresponding to the synchronization information in the DSMO according to the received DSMO access command.

The terminal in this embodiment may further include a fifth sending unit Y3, which is configured to send a result of querying and/or modifying the synchronization task corresponding to the synchronization information in the DSMO.

In this embodiment, the DSMO is set; when the time set in the timer arrives, the terminal obtains the synchronization information in the DSMO, and executes the synchronization task corresponding to the synchronization information in the DSMO. Because the server that synchronizes data with the terminal can access the DSMO in the terminal, and query and manage the specific synchronization task set in the DSMO of the terminal, the server can access the DSMO of the terminal to know the data synchronization operations to be performed between the terminal and the server, set and modify the data synchronization operations, and set the synchronization tasks, thus reducing the requirements on the technical capabilities of a user.

Described above is an outline of the terminal under the present invention. The following gives two embodiments of the terminal, depending on the setting of the DSMO.

### Eighth Embodiment

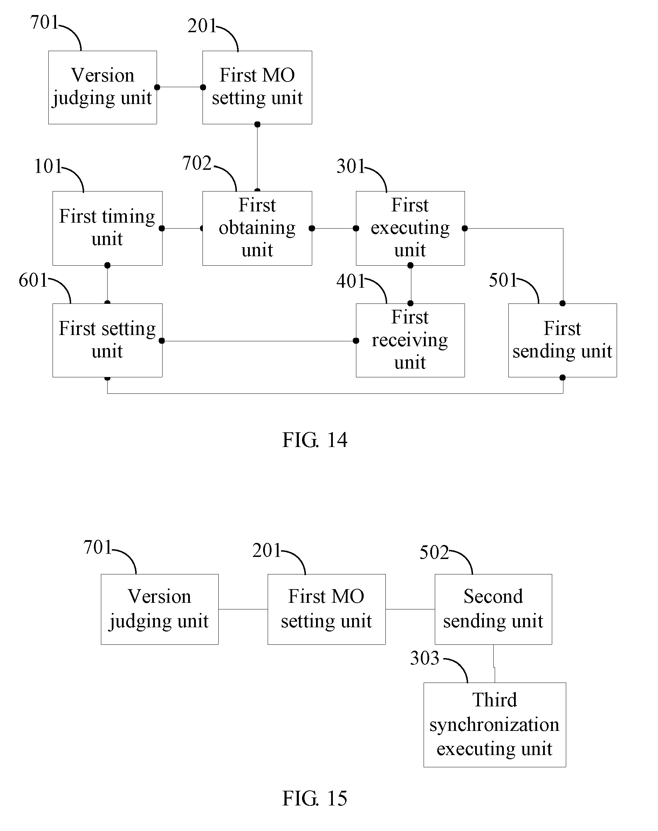

In a terminal provided in this embodiment, an executable node is added in the DSMO. Therefore, when the time set in the timer arrives, the executable node in the DSMO is executed, and the terminal obtains the synchronization information in the DSMO and executes the synchronization task corresponding to the synchronization information in the DSMO. As shown in FIG. 14, the terminal includes: a first timing unit 101, a first MO setting unit 201, a first synchronization executing unit 301, a first receiving unit 401, a first sending unit 501, a first setting unit 601, and a first obtaining unit 702.

The terminal provided in the eighth embodiment is similar to the terminal in the sixth embodiment. In the terminal provided in the eighth embodiment, the first MO setting unit 201 may also be included in the server; in the first MO setting unit 201, the DSMO is set according to the version of the data synchronization standard. If the version of the data synchronization standard is DS1.2.2, the first MO setting unit 201 sets the DSMO, and the setting result is shown in FIG. 3. An executable node (Sync in FIG. 3) and a Filter node are added in the DSMO. After the setting, other nodes in the DSMO are similar to those in the existing DSMO. If the version of the data synchronization standard is DS2.0, the first MO setting unit 201 sets the DSMO, and the setting result is shown in FIG. 6. The setting method is similar to that in the DS1.2.2 version.

When the time set in the first setting unit 601 arrives, the timing unit 101 sends a DM command to the first obtaining unit 702. The first obtaining unit 702 obtains the synchronization information included in the DSMO set in the first MO setting unit 201. The first synchronization executing unit 301 executes the synchronization task corresponding to the synchronization information in the DSMO according to the result obtained by the first obtaining unit 702, and executes the synchronization task corresponding to the synchronization information in the DSMO with the server through the first receiving unit 401 and the first sending unit 501.

Because the first MO setting unit 201 in the terminal needs to set the DSMO according to either of two versions of the synchronization standard, the first MO setting unit 201 needs to judge the version, and generate the final DSMO. Therefore, the terminal may further include a version judging unit 701, which is configured to judge the version of the synchronization standard. The version judging unit 701 may be included in the terminal or server.

It should be noted that in the eighth embodiment of the present invention, the first MO setting unit 201 may set the DSMO in other modes. FIG. 8 and FIG. 9 show the DSMO set by the first MO setting unit 201. The details of setting the DSMO have been given in the description about FIG. 8 and FIG. 9 in the third embodiment. An intermediate node (Sync in FIG. 8 and FIG. 9) are added in the root directory of the DSMO. The Sync node may include multiple datastore URIs, and multiple datastore URIs can be synchronized in one synchronization process. The multiple datastore URIs are synchronization content information in multiple URI nodes included in the datastore node under the Sync node in the DSMO.

In a synchronization process, as a result of setting the DSMO, the DSMO may be generated according to the DS1.2.2 version for synchronizing the data in a datastore URI, or may be generated according to the DS2.0 version for synchronizing data in a datastore URI, or may be generated according to the DS1.2.2 version for synchronizing data in at least one datastore URI, or may be generated according to the DS2.0 version for synchronizing data in at least one datastore URI. The applied method for setting and generating the DSMO depends on the use requirements of the terminal or server.

The first timing unit 101, the first synchronization executing unit 301, the first receiving unit 401, the first sending unit 501, the first setting unit 601, and the first obtaining unit 702 are similar to the timing unit 10, the synchronization executing unit 30, the receiving unit 40, the sending unit 50, the setting unit 60, and the obtaining unit 70 respectively. The working methods of the units in the seventh embodiment can be inferred according to the seventh embodiment.

In the eighth embodiment, the DSMO is set; when the time set in the timer arrives, the terminal obtains the synchronization information in the DSMO, and executes the synchronization task corresponding to the synchronization information in the DSMO. Because the server that synchronizes data with the terminal can access the DSMO in the terminal, and query and manage the specific synchronization task defined in the DSMO of the terminal, the server can access the DSMO of the terminal to know the data synchronization operations to be performed between the terminal and the server, set and modify the data synchronization operations, and define the synchronization tasks, thus reducing the requirements on the technical capabilities of a user.

### Ninth Embodiment

As shown in FIG. 15, a server includes a version judging unit 701, a first MO setting unit 201, a second sending unit 502, and a third synchronization executing unit 303.

It should be noted that, as described in the sixth embodiment, the version judging unit 701 and the first MO setting unit 201 may be included in the terminal or server. The functions of the units are similar to those in the sixth embodiment. The first MO setting unit 201 in the server generates a DM command for setting the DSMO, and the second sending unit 502 sends the DM command to the terminal for storing.

It should be noted that regardless of whether the DSMO is set by the terminal or the server, the server can reset and modify the DSMO.

When the terminal triggers execution of the synchronization operation periodically, the third synchronization executing unit 303 in the server performs synchronization with the terminal.

The server may further include:
a timing unit, configured to periodically trigger the DM command for executing the executable node in the set DSMO; and
a setting unit, configured to set the timing unit.

The server triggers the DM command for executing the executable node in the set DSMO when the timer expires. After receiving the DM command, the terminal obtains the synchronization information in the set DSMO, and executes the synchronization task corresponding to the synchronization information in the DSMO. For details, see the previous embodiment.

It can be seem from the description of the server provided in the ninth embodiment that, because the server that synchronizes data with the terminal can access the DSMO in the terminal, and query and manage the specific synchronization task defined in the DSMO of the terminal, the server can access the DSMO of the terminal to know the data synchronization operations to be performed between the terminal and the server, set and modify the data synchronization operations, and define the synchronization tasks, thus reducing the requirements on the technical capabilities of a user.

### Tenth Embodiment

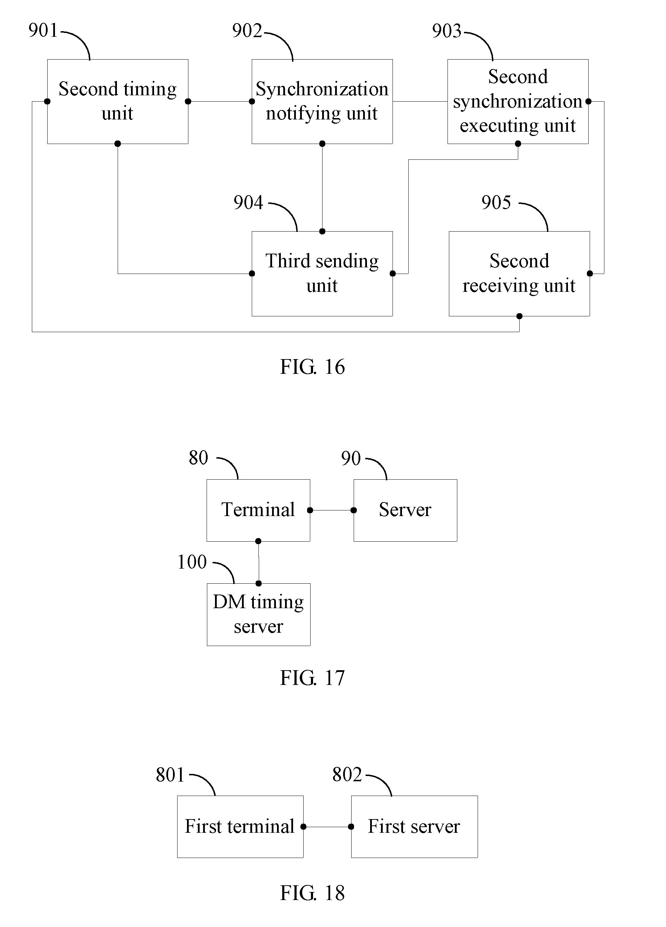

As shown in FIG. 16, a server includes a second timing unit 901, a synchronization notifying unit 902, a second synchronization executing unit 903, a third sending unit 904, and a second receiving unit 905.

The second timing unit 901 in the server is set first so that the server can execute the corresponding setting command when the set time arrives. The setting command is a synchronization notification message. The message may include these parameters: synchronization data type, synchronization content, and synchronization type. The message does not necessarily include the synchronization data type, and, in this case, the server synchronizes all data types by default. The message may further include filter information. The filter information indicates the filter applicable in the synchronization process, and is intended to filter out the data requiring no synchronization. The message does not necessarily include the filter information, and, in this case, it is deemed that all data needs to be synchronized.

For setting of the timer, the OMA DM scheduling technology may be applied to set the second timing unit 901 on the server. Therefore, the second timing unit 901 needs to be set through the third sending unit 904 and the second receiving unit 905 jointly.

When the time set by the second timing unit 901 arrives, the timer sends trigger information to the synchronization notifying unit 902. After receiving the trigger information, the synchronization notifying unit 902 generates a notification message, and the third sending unit 904 sends the notification message to the terminal.

After sending the notification message, the third sending unit 904 receives the synchronization operation information sent by the terminal, and the second synchronization executing unit 903 in the server executes the synchronization operation with the terminal through the third sending unit 904 and the second receiving unit 905.

In the server provided in the tenth embodiment, the second timing unit of the server triggers delivery of a synchronization notification message at the set time. The notification message notifies the terminal to synchronize data with the server. The server can set and modify the data synchronization operations, and define the synchronization tasks, thus reducing the requirements on the technical capabilities of a user.

The sixth embodiment to the tenth embodiment above deal with the apparatus under the present invention. The following describes the system provided in the present invention.

### Eleventh Embodiment

As shown in FIG. 17, a synchronization system includes a terminal 80 and a server 90.

The terminal 80 is configured to: set the synchronization information in the DSMO, obtain synchronization information in the DSMO, execute a synchronization task corresponding to the synchronization information in the DSMO, and query and/or modify the DSMO according to the received DSMO command.

The server 90 is configured to work with the terminal to execute the synchronization task corresponding to the synchronization information in the DSMO, and send a command for querying and/or modifying the synchronization information in the DSMO of the terminal.

The server 90 may be further configured to set the timer in the terminal so that the timer triggers a synchronization task in the executable node at the set time.

The time setting function may be performed by a DM timing server 100 which is different from the server 90, as shown in FIG. 14.

It should be noted that the terminal 80 in the synchronization system provided in the eleventh embodiment may be the terminal provided in the sixth embodiment or the eighth embodiment, and the server 90 may be the server provided in the ninth embodiment. For details, see the description in the sixth embodiment, the eighth embodiment, and the ninth embodiment.

In the synchronization system provided in the eleventh embodiment, the terminal or server sets the DSMO; when the time set in the timer of the terminal arrives, the terminal obtains the synchronization information in the DSMO, and executes the synchronization task corresponding to the synchronization information in the DSMO. Because the server that synchronizes data with the terminal can access the DSMO in the terminal, and query and manage the specific synchronization task defined in the DSMO of the terminal, the server can access the DSMO of the terminal to know the data synchronization operations to be performed between the terminal and the server, set and modify the data synchronization operations, and define the synchronization tasks, thus reducing the requirements on the technical capabilities of the terminal.

### Twelfth Embodiment

As shown in FIG. 18, a synchronization system includes a first terminal 801 and a first server 802.

The first terminal 801 is configured to receive a synchronization notification message sent by the first server 802, and synchronize data with the first server 802 according to the notification message.

The first server 802 is configured to send the notification message to the terminal at the set time, and deliver a notification message upon arrival of the set time to notify the terminal to perform a data synchronization operation.

In the synchronization system provided in the twelfth embodiment, the server triggers delivery of a notification message at the set time, and the notification message notifies the terminal to synchronize data with the server. The server can set and modify the data synchronization tasks, and define the synchronization tasks, thus reducing the requirements on the technical capabilities of a user.

Persons of ordinary skill in the art should understand that all or a part of the steps of the method in the embodiments of the present invention may be implemented by a program instructing relevant hardware. The program may be stored in a computer readable storage medium. The storage medium may be a Read-Only Memory (ROM), a magnetic disk, or a Compact Disk-Read Only Memory (CD-ROM).

Described above are a method, an apparatus, and a system for executing synchronization under the present invention. Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall within the scope of protection defined by the following claims or their equivalents.

## Claims

1. A method for executing synchronization, comprising:
obtaining synchronization information in a set Data Synchronization Management Object (DSMO); and
executing a synchronization task corresponding to the synchronization information in the DSMO.

2. The method according to claim 1, wherein:
before obtaining the synchronization information in the DSMO, the method further comprises:
periodically triggering a Device Management (DM) command for executing an executable node in the set DSMO; and
the step of obtaining the synchronization information in the set DSMO comprises:
obtaining the synchronization information in the set DSMO by the periodically triggering DM command for executing the executable node in the set DSMO.

3. The method according to claim 2, wherein:
the step of periodically triggering the DM command for executing the executable node in the set DSMO is performed by any one of a terminal and a server.

4. The method according to claim 1, wherein:
the synchronization information in the set DSMO comprises synchronization content, server identifier (ID), and synchronization type.

5. The method according to claim 1, wherein:
the synchronization information in the set DSMO comprises synchronization content, server identifier (ID), synchronization direction, and synchronization behavior.

6. The method according to claim 4 or 5, wherein:
the synchronization information in the set DSMO further comprises at least one of:
synchronization data type, filter information and combination thereof.

7. The method according to claim 1, further comprising:
setting the synchronization information in the DSMO.

8. The method according to claim 7, wherein the step of setting the synchronization information in the DSMO comprises:
storing a server identifier (ID) in a node under a DSMO root node; and
storing synchronization content and synchronization type in child nodes of a Sync node; wherein
the synchronization content is stored in at least one datastore Uniform Resource Identifier (URI) node, the URI node is a child node of a datastore node, and the datastore node is a child node of the Sync node.

9. The method according to claim 8, wherein the step of setting the synchronization information in the DSMO further comprises:
storing, in child nodes of the Sync node, at least one of:
synchronization data type, filter information and combination thereof.

10. A method for querying a synchronization task, comprising:
receiving a Data Synchronization Management Object (DSMO) query command sent by a server;
querying the synchronization task corresponding to synchronization information in a DSMO; and
sending a query result to the server.

11. A method for modifying a synchronization task, comprising:
receiving a Data Synchronization Management Object (DSMO) modification command sent by a server; and
modifying the synchronization task corresponding to synchronization information in a DSMO.

12. A terminal, comprising:
an obtaining unit, configured to obtain synchronization information in a set Data Synchronization Management Object (DSMO); and
an executing unit, configured to execute a synchronization task corresponding to the synchronization information in the DSMO.

13. The terminal according to claim 12, further comprising:
a timing unit, configured to periodically trigger a Device Management (DM) command for executing an executable node in the set DSMO.

14. The terminal according to claim 13, further comprising:
a setting unit, configured to set the timing unit.

15. The terminal according to claim 12, further comprising:
a Management Object (MO) setting unit, configured to set the DSMO, wherein the set DSMO comprises the synchronization information.

16. A terminal, comprising:
a fifth receiving unit, configured to receive a Data Synchronization Management Object (DSMO) access command sent by a server, wherein the DSMO access command is a DSMO query command and/or a DSMO modification command; and
an editing unit, configured to query and/or modify a synchronization task corresponding to synchronization information in a DSMO according to the received DSMO access command.

17. The terminal according to claim 16, further comprising:
a fifth sending unit, configured to send a result of querying and/or modifying the synchronization task corresponding to the synchronization information in the DSMO.

18. A server, comprising:
a first Management Object (MO) setting unit, configured to generate a Device Management (DM) command for setting a Data Synchronization Management Object (DSMO); and
a sending unit, configured to send the DM command for setting the DSMO to a terminal.

19. The server according to claim 18, further comprising:
a timing unit, configured to periodically trigger a DM command for executing an executable node in the set DSMO; and
a setting unit, configured to set the timing unit.

20. The server according to claim 18, further comprising:
a version judging unit, configured to judge a version of a data synchronization protocol applied by the DSMO.

21. A synchronization system, comprising:
a terminal, configured to obtain synchronization information in a set Data Synchronization Management Object (DSMO), and execute a synchronization task corresponding to the synchronization information in the DSMO; and
a server, configured to work with the terminal to execute the synchronization task corresponding to the synchronization information in the DSMO.

22. The synchronization system according to claim 20, further comprising:
a Device Management (DM) timing server, configured to set a timer in the terminal.

23. A synchronization system, comprising:
a terminal, configured to: query and/or modify a Data Synchronization Management Object (DSMO) according to a received DSMO access command, wherein the DSMO access command is a DSMO query command and/or a DSMO modification command; and
a server, configured to send the DSMO access command.
